# EUROPÄISCHE PATENTSCHRIFT

(11) **EP 3 522 724 B1**
(45) Veröffentlichungstag und Bekanntmachung des Hinweises auf die Patenterteilung: **28.06.2023**
(21) Anmeldenummer: 17787304.9
(22) Anmeldetag: 06.10.2017
(51) Int. Cl.: A21C 5/02, A21C 7/00

(54) **VERSTELLBARER WIRKEXZENTER**
ADJUSTABLE I-C-AW KNEADING ECCENTRIC
EXCENTRIQUE DE PÉTRISSAGE I-C-AW RÉGLABLE

(30) Priorität: 07.10.2016 AT 509072016
(43) Veröffentlichungstag der Anmeldung: 14.08.2019
(73) Patentinhaber: König Maschinen Gesellschaft mbH, 8045 Graz (AT)
(72) Erfinder: RAUCH, Eduard, 8321 St. Margarethen (AT)
(74) Vertreter: Wildhack & Jellinek
(86) Internationale Anmeldenummer: PCT/AT2017/060255
(87) Internationale Veröffentlichungsnummer: WO 2018/064698

(56) Entgegenhaltungen:
- EP-A2- 2 708 132
- DE-A1- 2 850 936
- DE-A1- 10 306 438
- DE-B- 1 126 333
- DE-T2- 69 320 562

## Beschreibung

Die vorliegende Erfindung betrifft eine Vorrichtung zum Wirken von Teig gemäß dem Oberbegriff des Patentanspruchs 1.

Aus dem Stand der Technik ist eine Vielzahl von Vorrichtungen bekannt, beispielsweise Rundwirkeinrichtungen oder Trommelrundwirkgerätschaften, mit denen Teig geschliffen bzw. gewirkt wird, also portionierte Teigstücke in eine gewünschte Form gebracht, insbesondere rundgewirkt werden, und gegebenenfalls dessen Konsistenz verändert bzw. verbessert wird. Beispielsweise sind aus dem Stand der Technik so genannte Wirktrommeln bekannt, mit denen vorportionierte Teigstücke in kugelförmige Teiglinge gewirkt werden können. Derartige aus dem Stand der Technik bekannte Wirktrommeln weisen eine äußere und eine innere Wirktrommel auf, die relativ zueinander durch einen Wirkexzenter bewegt werden, wobei Teig in Aufnahmeöffnungen, die in der äußeren Wirktrommel ausgebildet sind, eingebracht wird und in Kontakt mit der inneren Wirktrommel und der Relativbewegung zur äußeren Wirktrommel in Verbindung mit einem umlaufenden Band gewirkt werden.

Weiters ist aus dem Stand der Technik beispielsweise der DE 103 06 438 A1 (WERNER & PFLEIDERER LEBENSMITT [DE]) vom 26. August 2004 (2004-08-26) eine Vorrichtung zum Wirken von Teig umfassend eine rotierend angetriebene innere Wirktrommel und eine rotierend angetriebene äußere Wirktrommel bekannt. Die innere Wirktrommel ist innerhalb der hohl ausgebildeten äußeren Wirktrommel konzentrisch angeordnet, wobei die Vorrichtung einen Wirkantrieb umfasst, mit dem die äußere Wirktrommel oszillierend in Richtung ihrer Achse zur inneren Wirktrommel mit einem definierten Ausschlag antreibbar oder verstellbar ist. Die äußere Wirktrommel weist eine Anzahl von Wirkausnehmungen auf, die über den Umfang der äußeren Wirktrommel verteilt sind, wobei die Wirkausnehmungen derart ausgebildet sind, dass zwischen der äußeren Wirktrommel und der inneren Wirktrommel eine Anzahl der Wirkausnehmungen entsprechenden Anzahl von Wirkkammern ausgebildet sind, in die jeweils eine Teigportion einbringbar ist, die durch die oszillierende Relativbewegung der äußeren Wirktrommel zur inneren Wirktrommel gewirkt werden kann. Die Vorrichtung umfasst ebenfalls einen Wirkantrieb der einen Wirkhebel umfasst, der an einem Ende mit der äußeren Wirktrommel verbunden ist und mit dem anderen Ende am Kurbelfortsatz einer Exzenterkurbel über ein Kugelgelenk angelenkt ist, wobei die Exzenterkurbel in einer Verstellwelle exzentrisch verdrehbar gelagert ist, und wobei die Verstellweile derart in der Exzenterantriebswelle der Exzenterkurbel verdrehbar gelagert ist, dass bei relativer Verdrehung der Versteilwelle zur Exzenterantriebswelle die Lage des Kurbelfortsatzes zur Drehachse der Exzenterantriebswelle der Exzenterkurbel verstellt und damit der Ausschlag der äußeren Wirktrommel zur inneren Wirktrommelverändert wird.

Nachteil der aus dem Stand der Technik bekannten Vorrichtungen ist, dass nahezu für jedes produzierte Stückgewicht je eine passende Wirktrommel und ein dazu abgestimmter Wirkexzenter, welcher die oszillierende Bewegung der Innenwirktrommel bewerkstelligt, erforderlich ist. Da Teigteil- und Wirkmaschinen mit immer größeren Gewichtsbereichen ausgestattet werden bzw. immer in größeren Gewichtsbereichen arbeiten sollen, ist eine Vielzahl von Außenwirktrommeln sowie darauf abgestimmte Innenwirktrommeln und Wirkexzenter erforderlich. Dies hat hohe Kosten und Umrüstaufwände zur Folge und die Wirkergebnisse dieser nicht verstellbaren bzw. auf die Stückgewichte der Teiglinge einzustellenden Wirktrommeln und Wirkexzenter liefern keine optimalen Wirkergebnisse.

Aufgabe der Erfindung ist es daher eine Vorrichtung der eingangs genannten Art zu schaffen, die eine Bearbeitung bzw. ein Wirken von Teiglingen in einem großen Gewichtsbereich ermöglicht.

Diese Aufgabe wird durch die kennzeichnenden Merkmale des Anspruchs 1 gelöst. Durch die Verstellmöglichkeit des Ausschlages der Innenwirktrommel zur äußeren Wirktrommel ist es möglich, ohne Wechsel der einzelnen Komponenten, die Wirkbewegung auf die Gewichte der einzelnen Teiglinge abzustimmen. Durch die exzentrische Lagerung der Exzenterkurbel in der Verstellwelle wird eine einfache Verstellmöglichkeit des Wirkausschlages ermöglicht, die sogar während des laufenden Betriebs der Wirktrommel erfolgen kann. So kann der Wirkausschlag der Innenwirktrommel entsprechend der Größe der Außenwirktrommel, dem Stückgewicht, der Teigkonsistenz und der Spannung im Teig der zu produzierenden Teiglinge angepasst werden, wodurch die Anzahl der erforderlichen Wirktrommeln minimiert wird. Weiters kann der Wirkausschlag an die Teigkonsistenz, insbesondere die Spannung in den Teiglingen, angepasst werden und somit die Steigerung der Qualität der produzierten Teiglinge erhöht werden. Da der Wirkprozess am Anfang der Produktionskette steht, ist ein optimales Wirkergebnis die Voraussetzung für die Qualität der aus den Teiglingen produzierten Gebäckstücke. Durch die erfindungsgemäßen Merkmale kann weiters der Wirkausschlag automatisch verstellt werden, was die Rüstzeiten reduziert und beispielsweise erlaubt, je nach Teig ein eigenes Programm auf einem Speicher zu hinterlegen und dieses bei Bedarf abzurufen. Durch den Entfall der Rüstzeiten und der Möglichkeit der Speicherung der einzelnen Einstellungen wird keinerlei Fachpersonal benötigt und eine hundertprozentige Reproduzierbarkeit der Einstellungen und damit des Wirkprozesses gewährleistet.

Eine Verdrehung der Verstellwelle zur Exzenterantriebswelle, und damit die Verstellung der Exzentrizität der Exzenterkurbel wird ermöglicht, weil der Wirkantrieb eine Verstellvorrichtung umfasst, die derart ausgebildet ist, dass die Verstellwelle zur Exzenterantriebswelle um einen definierten Winkel verstellbar ist.

In der Erfindung ist die Exzenterantriebswelle der Exzenterkurbel über ein großes Kegelradpaar und über eine große Antriebswelle, mit dem Exzenterantrieb verdrehbar verbunden.

Der Antrieb der Exzenterkurbel über ein Kegelradpaar erlaubt eine kompakte Ausführung des Wirkantriebes und die einfache Positionierung der weiteren Antriebselemente des Exzenterantriebs.

Die Baugröße der Vorrichtung kann weiter reduziert werden, indem die Verstellwelle über ein kleines Kegelradpaar mit dem Exzenterantrieb verdrehbar verbunden ist, wobei die kleine Antriebswelle des kleinen Kegelradpaares in der als Hohlwelle ausgebildeten großen Antriebswelle des großen Kegelradpaares angeordnet und gelagert ist.

Durch die Lagerung der kleinen Antriebswelle in der als Hohlwelle ausgebildeten großen Antriebswelle wird eine einfache und besonders kompakte Ausführung des Wirkantriebes ermöglicht sowie eine vorteilhafte Positionierung der Antriebsmittel erreicht.

Ein separater Antrieb für die Verstellwelle bzw. die kleine Antriebswelle kann entfallen, weil die kleine Antriebswelle, über eine Kupplung, insbesondere Mehrpunktkupplung, drehmomentübertragbar mit dem Exzenterantrieb verbindbar ist. Hierdurch kann weiters die Synchronisierung des Antriebs der kleinen Antriebswelle bzw. der Verstellwelle mit dem Exzenterantrieb bzw. dem Antrieb der Exzenterkurbel synchronisiert werden.

Eine vorteilhafte Ausführungsform der Vorrichtung wird bereitgestellt, indem die Kupplung als federbelastete Magnetkupplung ausgebildet ist, wobei die Verbindung des Exzenterantriebs mit der Verstellwelle, insbesondere die kleine Antriebswelle, derart ausgebildet ist, dass bei Betätigung des Magneten der Magnetkupplung die Verbindung des Exzenterantriebs mit der Verstellwelle, insbesondere die kleine Antriebswelle, getrennt wird.

Vorteilhaft ist vorgesehen, dass die Exzenterkurbel mit der Exzenterantriebswelle über eine Kreuzschieberkupplung zum Mittelpunktsausgleich verbunden ist.

Durch die Kreuzschieberkupplung wird die Verstellung der Exzenterkurbel relativ zur Antriebswelle ermöglicht, wobei gleichzeitig die Mitnahme der Exzenterkurbel mittels der Antriebswelle und damit der Antrieb des Wirkantriebs besonders einfach ermöglicht wird.

Eine besonders kompakte Ausführungsform mit geringer Baugröße wird bereitgestellt, indem der Wirkantrieb in einem Getriebeblock gelagert und abgestützt ist, wobei der Getriebeblock mit dem Antrieb der äußeren Wirktrommel verbunden ist, sodass der Getriebeblock mit diesem bei Antrieb der äußeren Wirktrommel mitrotiert.

Eine einfache Kopplung des Exzenterantriebs mit dem Antrieb der äußeren Wirktrommel wird ermöglicht, indem der Wirkantrieb, insbesondere der Exzenterantrieb einen Riementrieb umfasst, der mit dem Antrieb der äußeren Wirktrommel gekoppelt ist.

Eine vorteilhafte Ausführungsform der erfindungsgemäßen Vorrichtung wird bereitgestellt, indem die innere Wirktrommel mit dem Antrieb der äußeren Wirktrommel, insbesondere dem Getriebeblock des Wirkantriebs verbunden ist, sodass die innere Wirktrommel mit der äußeren Wirktrommel mitrotiert. Dadurch ist es möglich, dass die innere Wirktrommel die äußere Wirktrommel und der Wirkantrieb mit lediglich einem Antriebsmittel angesteuert und angetrieben werden können.

Um die Vorrichtung an einem noch größeren Gewichtsbereich der Teiglinge anpassen zu können, ist vorgesehen, dass die innere Wirktrommel und die äußere Wirktrommel lösbar und wechselbar an der Vorrichtung angeordnet sind, sodass Wirktrommeln mit unterschiedlichen Abmessungen auf der Vorrichtung befestigbar sind.

Eine vorteilhafte Anwendung der erfindungsgemäßen Vorrichtung bzw. eine vorteilhafte Vorrichtung zum Bearbeiten und Wirken von Teig wird bereitgestellt, indem eine derartige Vorrichtung eine erfindungsgemäße Vorrichtung umfasst, wobei die äußere Wirktrommel an ihrem Umfang von einem Band zumindest teilweise umschlungen ist und wobei Teig aus einer Teigtrommel in die Wirkkammern der Vorrichtung einbringbar ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften aber nicht einschränkend zu verstehenden Ausführungsbeispielen in den Zeichnungen schematisch dargestellt und wird unter Bezugnahme auf die Zeichnungen beispielhaft beschrieben:
Fig. 1 zeigt eine isometrische Ansicht einer erfindungsgemäßen Vorrichtung.
Fig. 2 zeigt eine Schnittansicht der in Fig. 1 dargestellten Ausführungsform.
Fig. 3 und 4 zeigen eine Ausführungsform des Getriebegehäuses der erfindungsgemäßen Vorrichtung in Grund- und Kreuzriss.
Fig. 5 zeigt eine Schnittansicht der in den Figuren 3 und 4 dargestellten Ausführungsform.
Fig. 6 zeigt eine Schnittansicht E-E gemäß Fig. 4.
Fig. 7 zeigt eine Detailansicht des Wirkantriebs.
Fig. 8 und 9 zeigen den Wirkantrieb mit minimaler Exzentrizität in einer Schnittansicht und einer Detailansicht.
Fig. 10 und 11 zeigt den Wirkantrieb mit maximaler Exzentrizität in einer Schnittansicht und einer Detailansicht.

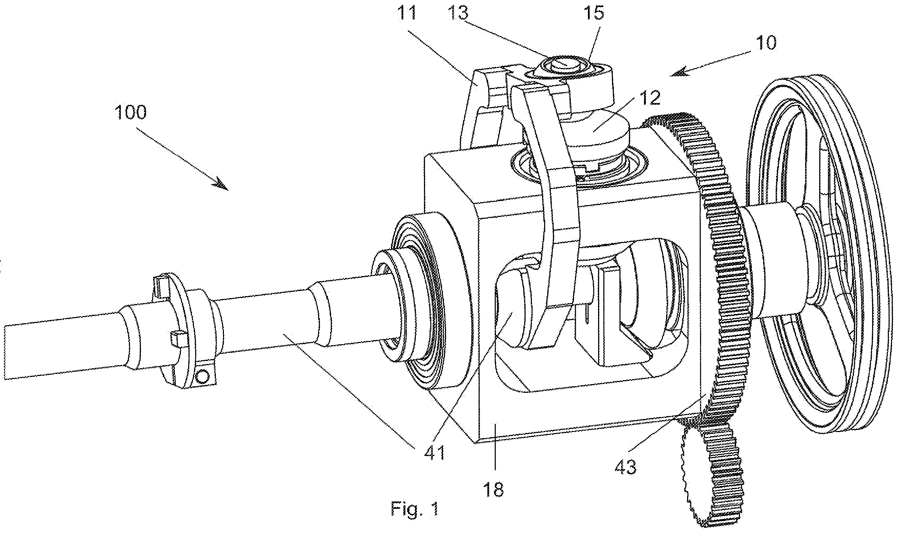

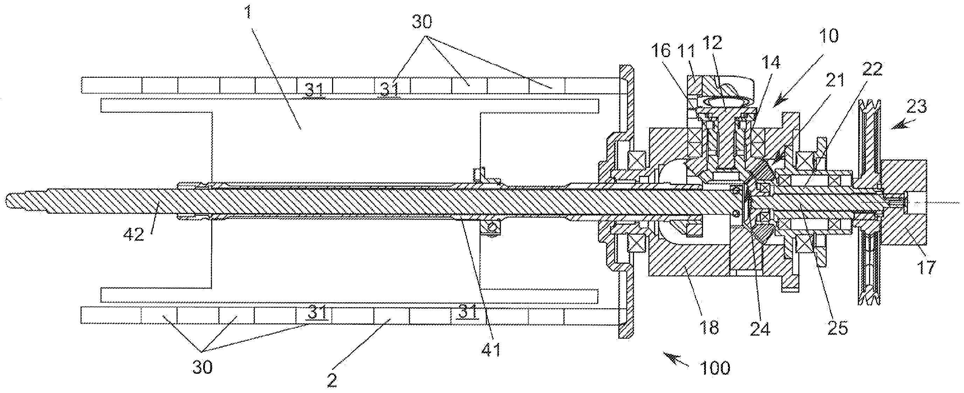

In Fig. 1 ist eine isometrische Ansicht einer Ausführungsform der erfindungsgemäßen Vorrichtung 100 zum Wirken von Teig dargestellt. Die Vorrichtung 100 umfasst eine innere Wirktrommel 1 und eine äußere Wirktrommel 2 (Fig. 2) die konzentrisch zueinander angeordnet sind, wobei die innere Wirktrommel 1 innerhalb der hohl ausgebildeten äußeren Wirktrommel 2 angeordnet ist. Die Vorrichtung 100 umfasst weiters einen Wirkantrieb 10, mit dem die innere Wirktrommel 1 oszillierend in Richtung ihrer Achse zur äußeren Wirktrommel 2 und in einen Winkel um ihre Achse zur äußeren Wirktrommel 2 mit einem definierten Ausschlag verstellbar ist. Der Wirkantrieb 10 umfasst einen Wirkhebel 11, der an einem Ende mit der Welle 41 der inneren Wirktrommel 1 verbunden ist und mit dem der inneren Wirktrommel 1 gegenüberliegenden Ende des Wirkhebels 11 über ein Kugelgelenk 15 mit dem Kurbelfortsatz 13 einer Exzenterkurbel 12 verbunden ist.

Fig. 2 zeigt eine Schnittansicht der in Fig. 1 dargestellten Ausführungsform der erfindungsgemäßen Vorrichtung 100. Die innere Wirktrommel 1 ist auf der Welle 41 gelagert, die als Hohlwelle ausgebildet ist und auf einer Führungswelle 42 in ihrer Achse und damit der Achse der inneren Wirktrommel 1 verschiebbar ist. Die äußere Wirktrommel 2 ist hohl ausgebildet und mit der inneren Wirktrommel 1 konzentrisch angeordnet. Die äußere Wirktrommel 2 weist eine Anzahl von Wirkausnehmungen 30, bei dieser Ausführungsform zwölf Wirkausnehmungen 30, auf, die gleichmäßig über den Umfang und entlang der Längserstreckung der äußeren Wirktrommel 2 verteilt sind. Die Wirkausnehmungen 30 durchsetzen die äußere Wirktrommel 2 vollständig, sodass ein Zugang von dem Umgebungsbereich der äußeren Wirktrommel 2 zur inneren Wirktrommel 1 ausgebildet wird. Die Wirkausnehmungen 30 bilden somit mit der inneren Wirktrommel 1 eine Anzahl der Anzahl der Wirkausnehmungen 30 entsprechenden Wirkkammern 31 aus. In die Wirkkammern 31 können vorportionierte Teigportionen eingebracht werden, die durch die oszillierende Relativbewegung der inneren Wirktrommel 1 zur äußeren Wirktrommel 2 gewirkt bzw. verformt werden.

Der Wirkantrieb 10 ist in einem Getriebeblock 18 gelagert bzw. abgestützt. Der Getriebeblock 18 wird durch ein an dem Getriebeblock 18 befestigtes Zahnrad 43 angetrieben und mit der äußeren Wirktrommel 2 mitrotiert bzw. verdreht.

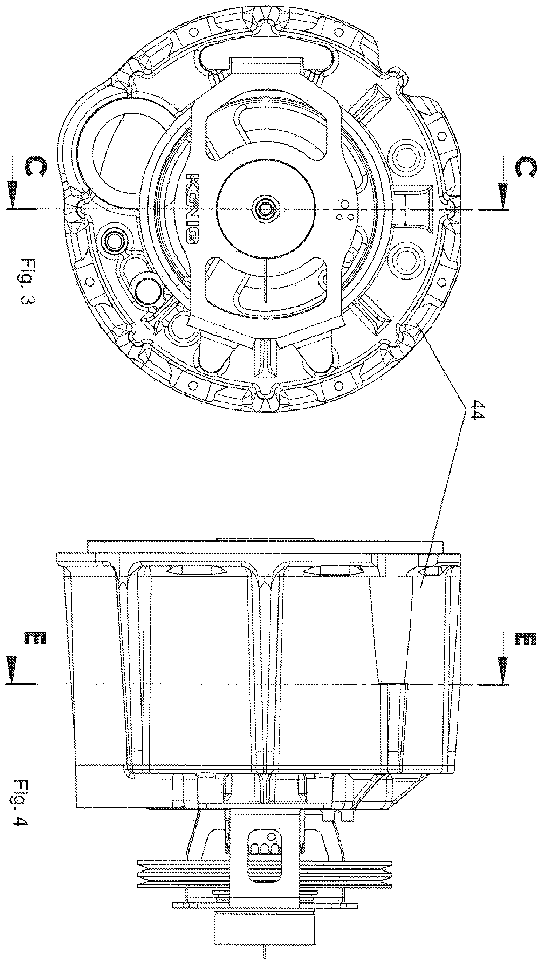

In den Fig. 3 und 4 ist das Getriebegehäuse 44 der Vorrichtung 100 dargestellt. Innerhalb des Getriebegehäuses 44 der Vorrichtung 100 ist der Wirkantrieb 10 angeordnet sowie die äußere Wirktrommel 2, die innere Wirktrommel 1 und der Wirkantrieb 10 verdrehbar gelagert.

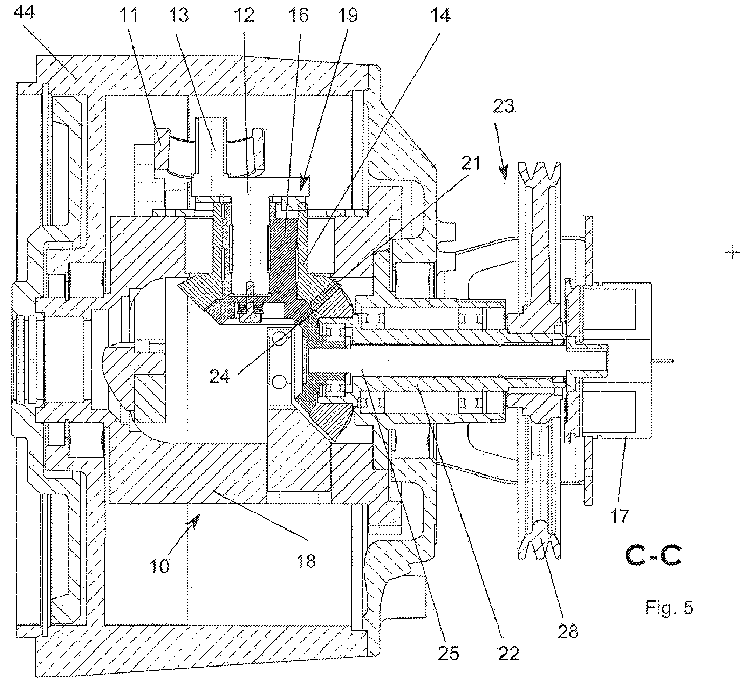

Fig. 5 zeigt einen Vollschnitt entlang der in Fig. 3 dargestellten Schnittlinien C-C ohne äußere Wirktrommel 2 und innere Wirktrommel 1. Der Wirkantrieb 10 umfasst eine Verstellwelle 16, in der die Exzenterkurbel 12 exzentrisch, also außermittig verdrehbar gelagert ist. Die Verstellwelle 16 ist selbst in der Exzenterantriebswelle 14 verdrehbar gelagert, wobei die Achse der Verstellwelle 16 konzentrisch mit der Achse der Exzenterantriebswelle 14 angeordnet ist. An dem dem Kurbelfortsatz 13 gegenüberliegenden Ende der Verstellwelle 16 ist ein kleines Kegelradpaar 24 angeordnet. Über das kleine Kegelradpaar 24 ist die Verstellwelle 16 mit einer kleinen Antriebswelle 25 verbunden. Die Exzenterantriebswelle 14 ist mit der Exzenterkurbel 12 über eine Kreuzschieberkupplung 19 verbunden, sodass die Verdrehung der Exzenterantriebswelle 14 zur Verdrehung der Exzenterkurbel 12 führt. Die Kreuzschieberkupplung 19 erlaubt eine radiale Verstellung der Exzenterkurbel 12 zur Exzenterantriebswelle 14 und erlaubt gleichzeitig eine Übertragung eines Drehmoments von der Exzenterantriebswelle 14 auf die Exzenterkurbel 12. An dem der Exzenterkurbel 12 gegenüberliegenden Ende der Exzenterantriebswelle 14 ist ein großes Kegelradpaar 21 angeordnet, das die Exzenterantriebswelle 14 mit einer großen Antriebswelle 22 verbindet. Die kleine Antriebswelle 25 des kleinen Kegelradpaares 24 ist in der als Hohlwelle ausgebildeten großen Antriebswelle 22 des großen Kegelradpaares 21 angeordnet und in dieser verdrehbar gelagert. Auf dem dem großen Kegelradpaar 21 gegenüberliegenden Ende der großen Antriebswelle 22 ist eine Riemenscheibe 28 des Exzenterantriebs 23 angeordnet. Über die Riemenscheibe 28 ist die große Antriebswelle 22 über einen Riementrieb mit dem Antrieb der äußeren Wirktrommel 2 gekoppelt. An dem dem kleinen Kegelradpaar 24 gegenüberliegenden Ende der kleinen Antriebswelle 25 ist eine Kupplung 17 angeordnet, mit der die kleine Antriebswelle 25 mit der großen Antriebswelle 22 bzw. mit der Riemenscheibe 28 bzw. mit dem Exzenterantrieb 23 verbunden werden kann.

Die Kupplung 17 ist bei dieser Ausführungsform als federbelastete Magnetkupplung ausgebildet, wobei die Kupplung 17 bei ausgeschaltenem Elektromagneten, also im stromlosen Zustand, durch die in der Kupplung 17 angeordnete Feder die Verbindung zwischen der großen Antriebswelle 22 und der kleinen Antriebswelle 25 bzw. zwischen der kleinen Antriebswelle 25 und den Exzenterantrieb 23 herstellt. Wird nun der Elektromagnet der Kupplung 17 betätigt, so wird die Verbindung zwischen der kleinen Antriebswelle 25 und der großen Antriebswelle 22 gelöst und eine Relativbewegung der großen Antriebswelle 22 zur kleinen Antriebswelle 25 ermöglicht. Die Kupplung 17 kann dabei den Kontakt zwischen der kleinen Antriebswelle 25 und der großen Antriebswelle 22 durch Einrücken zweier Zahnradverbindungen oder anderer aus dem Stand der Technik bekannter Verbindungselemente herstellen. Alternativ kann die Kupplung 17 auch umgekehrt funktionieren, also im stromlosen Zustand die Trennung der Verbindung der kleinen Antriebswelle 25 von der großen Antriebswelle 22 bzw. dem Exzenterantrieb 23 bewerkstelligen und im Gegenzug dazu die Federbelastung der Kupplung 17 in stromlosen Zustand die Verbindung der kleinen Antriebswelle 25 mit der großen Antriebswelle 22 trennen. Alternativ kann die Kupplung 17 auch als andere aus dem Stand der Technik bekannte Kupplung ausgebildet sein, beispielsweise als Lamellenkupplung, Klauenkupplung oder andere Kupplungstypen, die eine lösbare, verstellbare Verbindung, wie ein Verstellgetriebe, Ratshebel, und dgl., zwischen der kleinen Antriebswelle 25 und der großen Antriebswelle 22 herstellen können.

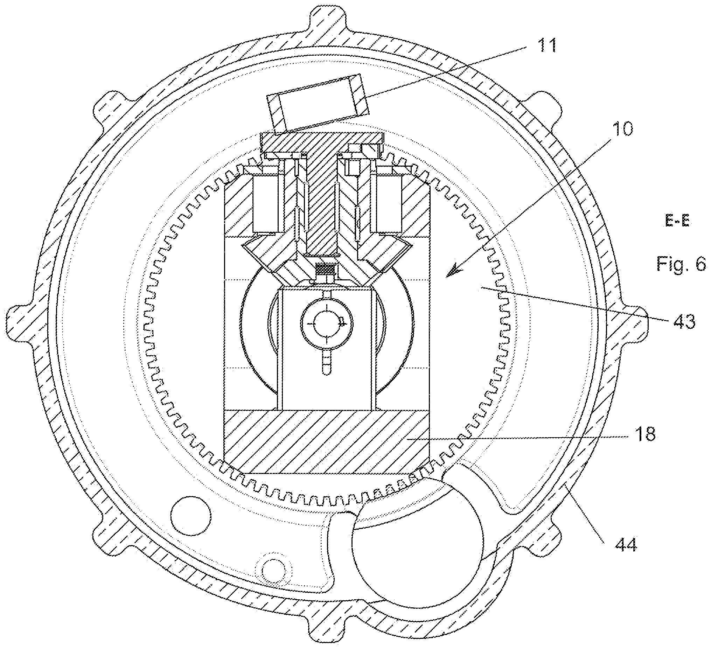

In Fig. 6 ist eine Schnittansicht entlang der Schnittachsen E-E gemäß Fig. 4 dargestellt. Der innerhalb des Getriebegehäuses 44 gelagerte Getriebeblock 18 des Wirkantriebs 10 wird über das Zahnrad 43 in dem Getriebegehäuse 44 der Vorrichtung 100 rotiert, wobei der Wirkhebel 11, der an der inneren Wirktrommel 1 befestigt ist, mit dem Wirkantrieb 10 mitrotiert wird.

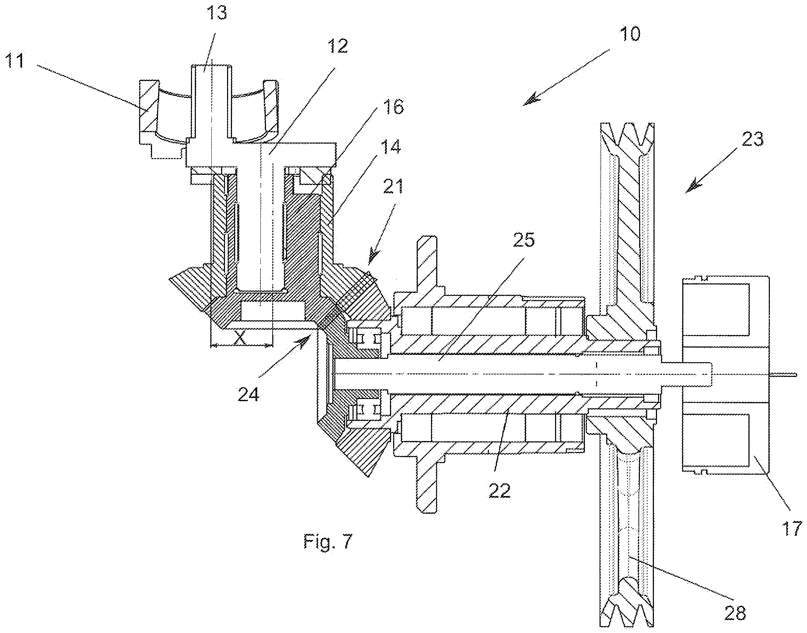

Anhand der Fig. 7 bis 11 ist im Folgenden die Funktion der in den Fig. 5 und 6 beschriebenen bevorzugten Ausführungsform der erfindungsgemäßen Vorrichtung 100 beschrieben:
Wie in Fig. 7 dargestellt, ist bei geöffneter Kupplung 17 bzw. im stromlosen Zustand der Magnetkupplung die Verbindung zwischen der kleinen Antriebswelle 25 und der großen Antriebwelle 22 hergestellt, womit die kleine Antriebswelle 25 mit der großen Antriebswelle 22 mitrotiert. Der Exzenterantrieb 23 treibt über die Riemenscheibe 28 die große Antriebswelle 22 und damit die kleine Antriebswelle 25 an. Über das große Kegelradpaar 21 wird die Exzenterantriebswelle 14 in ihrer Achse rotiert und über die Kreuzschieberkupplung 19 die Exzenterkurbel 12 angetrieben. Bei Rotation der Exzenterkurbel 12 vollzieht der Kurbelfortsatz 13 eine Kreisbewegung, wodurch der Wirkhebel 11 entlang einer Kreisbahn verstellt wird und die innere Wirktrommel 1 um ihre Achse relativ zur äußeren Wirktrommel 2 verdreht und gleichzeitig die innere Wirktrommel 1 entlang ihrer Achse verschoben bzw. oszillierend verstellt wird. Durch die geschlossene Verbindung der kleinen Antriebswelle 25 mit der großen Antriebswelle 22 wird das kleine Kegelradpaar 24 mit dem großen Kegelradpaar 21 mit der selben Winkelgeschwindigkeit mitrotiert, wodurch die Verstellwelle 16 mit der selben Winkelgeschwindigkeit wie die Antriebswelle 14 und damit mit der selben Winkelgeschwindigkeit wie die Exzenterkurbel 12 mitrotiert wird. Bei gemeinsamer Rotation der Verstellwelle 16 mit der Exzenterantriebswelle 14 bzw. der Exzenterkurbel 12 wird die Exzentrizität X (Fig. 7) der Exzenterkurbel 13 zur Drehachse der Exzenterantriebswelle 14 bzw. die Exzentrizität der Exzenterkurbel zur Drehachse der Verstellwelle 16 beibehalten und damit der Wirkausschlag der inneren Wirktrommel 1 konstant gehalten.

Wird nun die Kupplung 17 bzw. der Magnet der Magnetkupplung betätigt, wird die Verbindung zwischen der kleinen Antriebswelle 25 und der großen Antriebswelle 22 getrennt. Durch die Trennung der Verbindung zwischen der kleinen Antriebswelle 25 und der großen Antriebswelle 22 wird die große Antriebswelle 22 über den Exzenterantrieb 23 bzw. die Riemenscheibe 28 relativ zur kleinen Antriebswelle 25 verdreht. Durch die relative Verdrehung der großen Antriebswelle 22 zur kleinen Antriebswelle 25 wird das große Kegelradpaar 21 relativ zum kleinen Kegelradpaar 23 verdreht. Über die Exzenterantriebswelle 14 wird sodann die in der Verstellwelle 16 exzentrisch gelagerte Exzenterkurbel 12 zur Verstellwelle 16 um einen definierten Winkelbetrag zu dieser verdreht bzw. verstellt. Über die exzentrische Lagerung der Exzenterkurbel 12 in der Verstellwelle 16 und dem durch die gelöste Kupplung 17 bewirkten Freilauf des kleinen Kegelradpaars 23 bzw. der kleinen Antriebswelle 25 wird die Verstellwelle 16 bzw. deren exzentrische Ausnehmung, in der die Exzenterkurbel 12 gelagert wird, in der Exzenterantriebswelle 14 verstellt bzw. verdreht. Durch die Verdrehung der Verstellwelle 16 relativ zur Exzenterantriebswelle 14 wird die Exzentrizität x der Exzenterkurbel 12 und damit der Ausschlag des Kurbelfortsatzes 13 verändert. Ist sodann die geforderte Exzentrizität X erreicht, wird die Kupplung 17 wieder geschlossen und die Verstellwelle 16 rotiert wieder mit der Exzenterantriebswelle 14 mit, wodurch die Exzentrizität X konstant gehalten wird.

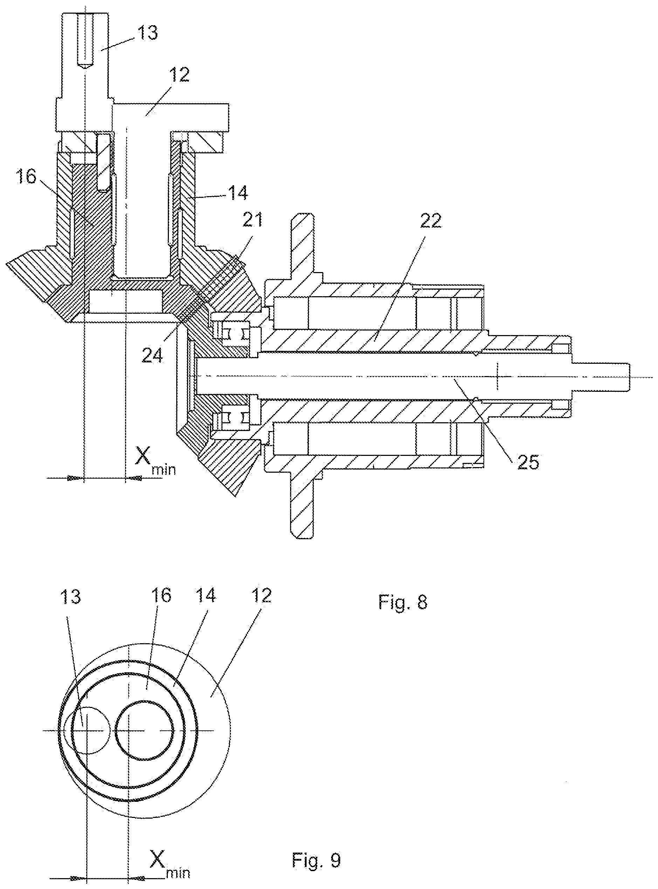

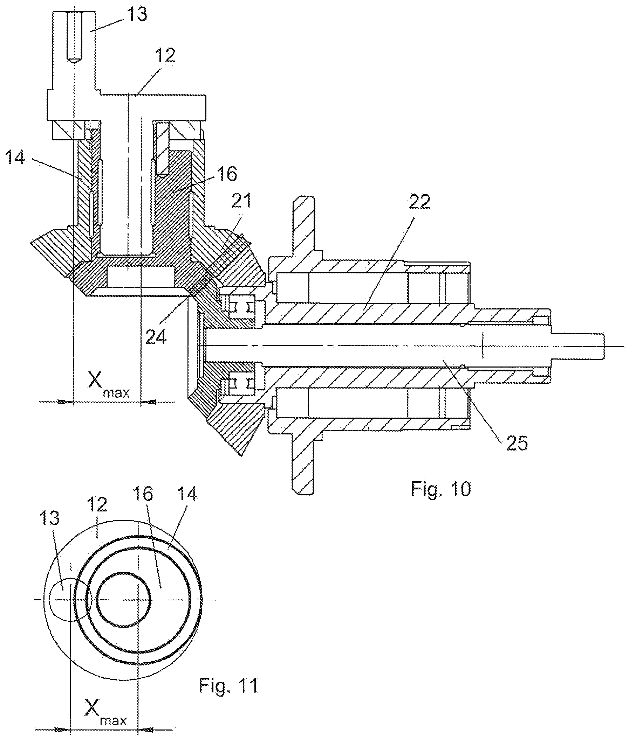

In den Fig. 8 und 9 ist die minimale Exzentrizität Xₘᵢₙ der Exzenterkurbel 12 relativ zur Verstellwelle 16 dargestellt. In den Fig. 10 und 11 ist die maximale Exzentrizität Xₘₐₓ der Exzenterkurbel 12 zur Verstellwelle 16 bzw. zur Drehachse der Exzenterantriebswelle 14 dargestellt. Durch die Rotation des Kurbelfortsatzes 13 um die Mittelachse der Exzenterantriebswelle 14 wird die innere Wirktrommel 1 über den Wirkhebel 11 in einer Umdrehung der Exzenterantriebswelle 14 um das doppelte Maß der eingestellten Exzentrizität X in ihrer Achse über die Hohlwelle 41 (Fig. 2) relativ zur äußeren Wirktrommel 2 verschoben bzw. oszilliert. Durch die Verdrehung der Exzenterkurbel 12 bzw. des Kurbelfortsatzes 13 wird der Wirkhebel 11 ebenfalls um die Achse der inneren Wirktrommel 1 und damit die innere Wirktrommel 1 um ihre eigene Achse relativ zur äußeren Wirktrommel 2 ebenso oszillierend verstellt. Die innere Wirktrommel 1 vollzieht somit relativ zur äußeren Wirktrommel 2 eine taumelnde elliptische Bewegung und erlaubt ein besonders vorteilhaftes Wirken der in die Wirkkammern 31 eingebrachten Teigstücke.

Eine bevorzugte Anwendung der erfindungsgemäßen Vorrichtung 100 sieht vor, dass diese in einer Vorrichtung zum Bearbeiten und Portionieren von Teig vorgesehen ist, wobei die äußere Wirktrommel 2 von einem Band umschlungen ist und die Teiglinge beispielsweise aus einer Teigtrommel in definierten Portionen in die Wirkkammern 31 der Vorrichtung 100 eingebracht werden. Die Vorrichtung 100 wird dann mittels des Bandes bzw. mit dem Band mitrotiert und durch die relative Bewegung der inneren Wirktrommel 1 zur äußeren Wirktrommel 2 die in die Wirkkammern 31 eingebrachten Teiglinge verformt bzw. gewirkt und nach einer definierten Rotation der Vorrichtung 100 um einen Winkelbetrag mittels des Bandes wieder aus den Wirkkammern 31 der Vorrichtung 100 ausgebracht.

Alternativ zur Verstellung mittels des kleinen Kegelradpaars 24 und dem großen Kegelradpaar 21, und nicht Teil der vorliegenden Erfindung, kann die Exzenterkurbel 12 relativ zur Verstellwelle 16 beispielsweise direkt über einen Elektromotor verdreht werden oder es andere aus dem Stand der Technik bekannte Getriebeformen an Stelle der Kegelradpaare vorgesehen sein.

Eine alternative Ausführungsform, nicht Teil der vorliegenden Erfindung, sieht vor, dass der Wirkantrieb 10 eine Verstellvorrichtung umfasst, mit der die Verstellwelle 16 zur Exzenterantriebswelle 14 um einen definierten Winkel verstellt werden kann. So kann beispielsweise das kleine Kegelradpaar 24 einen separaten Antrieb umfassen, der gleich dem Antrieb des großen Kegelradpaars 21 angetrieben wird, sodass das kleine Kegelradpaar 24 mit der selben Winkelgeschwindigkeit wie das große Kegelradpaar 21 rotiert und bei einer benötigten Verstellung die Winkelgeschwindigkeit des kleinen Kegelradpaares 24 zur Winkelgeschwindigkeit des großen Kegelradpaares 21 verändert wird. Weiters kann alternativ vorgesehen sein, dass die Verstellwelle 16 direkt, beispielsweise über einen Elektromotor, angetrieben wird und derart die Verstellung der Verstellwelle 16 zur Exzenterantriebswelle 14 erfolgt.

## Patentansprüche

1. Vorrichtung (100) zum Wirken von Teig, insbesondere Wirktrommel, umfassend eine rotierend angetriebene innere Wirktrommel (1) und eine rotierend angetriebene äußere Wirktrommel (2), wobei die innere Wirktrommel (1) innerhalb der hohl ausgebildeten äußeren Wirktrommel (2), insbesondere konzentrisch, angeordnet ist,
- wobei die Vorrichtung (100) einen Wirkantrieb (10) umfasst, mit dem die innere Wirktrommel (1) oszillierend in Richtung ihrer Achse zur äußeren Wirktrommel (2), insbesondere zusätzlich in einem Winkel um ihre Achse, relativ zur äußeren Wirktrommel (2) mit einem definierten Ausschlag antreibbar oder verstellbar ist,
- wobei die äußere Wirktrommel (2) eine Anzahl von Wirkausnehmungen (30) aufweist, die insbesondere gleichmäßig über den Umfang und/oder entlang der Längserstreckung der äußeren Wirktrommel (2) verteilt sind, wobei die Wirkausnehmungen (30) derart ausgebildet sind, dass zwischen der äußeren Wirktrommel (2) und der inneren Wirktrommel (1) eine Anzahl der Wirkausnehmungen (30) entsprechenden Anzahl von Wirkkammern (31) ausgebildet sind, in die jeweils eine Teigportion einbringbar ist, die durch die oszillierende Relativbewegung der inneren Wirktrommel (1) zur äußeren Wirktrommel (2) gewirkt werden kann.
- wobei der Wirkantrieb (10) einen Wirkhebel (11) umfasst, der an einem Ende mit der inneren Wirktrommel (1), insbesondere starr, verbunden ist und mit dem anderen Ende an einem Kurbelfortsatz (13) einer Exzenterkurbel (12), vorzugsweise über ein Kugelgelenk (15), angelenkt ist,
- wobei der Wirkantrieb einen Exzenterantrieb (23) umfasst mit dem eine Exzenterantriebswelle (14) antreibbar verbunden ist, wobei der Ausschlag des Wirkantriebs (10) verstellbar ist,
- wobei die Exzenterkurbel (12) in einer Verstellwelle (16) exzentrisch verdrehbar gelagert ist, und wobei die Verstellwelle (16) derart in der Exzenterantriebswelle (14) der Exzenterkurbel (12) verdrehbar gelagert ist, dass bei relativer Verdrehung der Verstellwelle (16) zur Exzenterantriebswelle (14) die Lage des Kurbelfortsatzes (13) zur Drehachse der Exzenterantriebswelle (14) der Exzenterkurbel (12) verstellt und damit der Ausschlag der inneren Wirktrommel (1) zur äußeren Wirktrommel (2) verändert wird,
wobei die Exzenterantriebswelle (14) der Exzenterkurbel (12) über ein großes Kegelradpaar (21) und über eine große Antriebswelle (22)mit dem Exzenterantrieb (23) verdrehbar verbunden ist, und
wobei die Verstellwelle (16) über ein kleines Kegelradpaar (24) mit dem Exzenterantrieb (23) verdrehbar verbunden ist, wobei eine kleine Antriebswelle (25) des kleinen Kegelradpaares (24) in der als Hohlwelle ausgebildeten großen Antriebswelle (22) des großen Kegelradpaares (21) angeordnet und gelagert ist, und
wobei die kleine Antriebswelle (25), über eine Kupplung (17), insbesondere Mehrpunktkupplung, drehmomentübertragbar mit dem Exzenterantrieb (23) verbindbar ist.

2. Vorrichtung (100) nach Anspruch 1, **dadurch gekennzeichnet, dass** die Kupplung (17) als federbelastete Magnetkupplung ausgebildet ist, wobei die Verbindung des Exzenterantriebs (23) mit der kleinen Antriebswelle (25), derart ausgebildet ist, dass bei Betätigung des Magneten der Magnetkupplung die Verbindung des Exzenterantriebs (23) mit der kleinen Antriebswelle (25), getrennt wird.

3. Vorrichtung (100) nach einem der vorangehenden Ansprüche, **dadurch gekennzeichnet, dass** die Exzenterkurbel (12) mit der Exzenterantriebswelle (14) über eine Kreuzschieberkupplung (19) zum Mittelpunktsausgleich verbunden ist.

4. Vorrichtung (100) nach einem der vorangehenden Ansprüche, **dadurch gekennzeichnet, dass** der Wirkantrieb (10) in einem Getriebeblock (18) gelagert und abgestützt ist, wobei der Getriebeblock (18) mit dem Antrieb der äußeren Wirktrommel (2) verbunden ist, sodass der Getriebeblock (18) mit der äußeren Wirktrommel (2) bei Antrieb der äußeren Wirktrommel (2) mitrotiert.

5. Vorrichtung (100) nach einem der vorangehenden Ansprüche, **dadurch gekennzeichnet, dass** der Wirkantrieb (10), insbesondere der Exzenterantrieb (23), einen Antrieb, vorzugsweise Riementrieb umfasst, der mit dem Antrieb der äußeren Wirktrommel (2) gekoppelt ist.

6. Vorrichtung (100) nach einem der vorangehenden Ansprüche, **dadurch gekennzeichnet, dass** die innere Wirktrommel (1) mit dem Antrieb der äußeren Wirktrommel (2), insbesondere dem Getriebeblock (18) des Wirkantriebs verbunden ist, sodass die innere Wirktrommel (1) mit der äußeren Wirktrommel (2) mitrotiert.

7. Vorrichtung nach einem der vorangehenden Ansprüche, **dadurch gekennzeichnet, dass** die innere Wirktrommel (1) und die äußere Wirktrommel (2) lösbar und wechselbar an der Vorrichtung (100) angeordnet sind, sodass Wirktrommeln mit unterschiedlichen Abmessungen auf der Vorrichtung befestigbar sind.

8. Vorrichtung zum Bearbeiten und Wirken von Teig, umfassend eine Vorrichtung (100) nach einem der Ansprüche 1 bis 7, wobei die äußere Wirktrommel (2) an ihrem Umfang von einem Band zumindest teilweise umschlungen ist, und wobei Teig aus einer Teigtrommel in die Wirkkammern (31) der Vorrichtung (100) einbringbar ist.

## Claims

1. Device (100) for kneading dough, in particular a kneading drum, comprising a rotationally driven inner kneading drum (1) and a rotationally driven outer kneading drum (2), wherein the inner kneading drum (1) is arranged within the hollow outer kneading drum (2), in particular in a concentric manner,
- wherein the device (100) comprises a kneading drive (10) by means of which the inner kneading drum (1) can be driven or adjusted in an oscillating manner in the direction of the inner kneading drum axis relative to the outer kneading drum (2), so as to carry out a defined deflection, in particular additionally at an angle about the axis of the inner kneading drum relative to the outer kneading drum (2),
- wherein the outer kneading drum (2) has a number of kneading recesses (30) which are distributed over the periphery and/or along the length of the outer kneading drum (2) in a uniform manner in particular, wherein the kneading recesses (30) are designed such that a number of kneading chambers (31), said number corresponding to the number of kneading recesses (30), are formed between the outer kneading drum (2) and the inner kneading drum (1), and a respective portion of dough can be introduced into each kneading chamber, said portion of dough being kneaded by the oscillating movement of the inner kneading drum (1) relative to the outer kneading drum (2),
- wherein the kneading drive (10) comprises a kneading lever (11) which is connected with the inner kneading drum (1) at one end, in particular in a rigid manner, and is hinged to the crank protrusion (13) of an eccentric crank (12) at the other end, preferably via a ball joint (15),
- wherein the kneading drive comprises an eccentric drive (23) with which an eccentric drive shaft (14) is drivably connected, wherein the deflection of the kneading drive (10) is adjustable,
- wherein the eccentric crank (12) is mounted in an eccentrically rotatable manner in a setting shaft (16), and wherein the setting shaft (16) is rotatably mounted in the eccentric drive shaft (14) of the eccentric crank (12) such that the position of the crank protrusion (13) is adjusted relative to the rotational axis of the eccentric drive shaft (14) of the eccentric crank (12), thus modifying the deflection of the inner kneading drum (1) relative to the outer kneading drum (2), when the setting shaft (16) is rotated relative to the eccentric drive shaft (14),
wherein the eccentric drive shaft (14) of the eccentric crank (12) is rotatably connected with the eccentric drive (23) by a large pair of cogwheels (21) and by a large drive shaft (22), and
wherein the setting shaft (16) is rotatably connected with the eccentric drive (23) by a small pair of cogwheels (24), wherein a small drive shaft (25) of the small pair of cogwheels (24) is arranged and mounted in the large hollow drive shaft (22) of the large pair of cogwheels (21), and
wherein the small drive shaft (25) can be connected by a coupling (17), in particular a multi-point coupling, with the eccentric drive (23) in a torque-transmitting manner.

2. Device (100) according to claim 1, **characterised in that** the coupling (17) is configured as a spring-loaded magnetic coupling, wherein the connection of the eccentric drive (23) with the small drive shaft (25) is configured in such a way that upon actuation of the magnet of the magnetic coupling, the connection of the eccentric drive (23) with the small drive shaft (25) is severed.

3. Device (100) according to any one of the preceding claims, **characterised in that** the eccentric crank (12) is connected with the eccentric drive shaft (14) by an Oldham coupling (19) for centrepoint compensation.

4. Device (100) according to any one of the preceding claims, **characterised in that** the kneading drive (10) is mounted and supported in a gearbox (18), wherein the gearbox (18) is connected with the drive of the outer kneading drum (2), such that the gearbox (18) co-rotates with the outer kneading drum (2) when the outer kneading drum (2) is driven.

5. Device (100) according to any one of the preceding claims, **characterised in that** the kneading drive (10), in particular the eccentric drive (23), comprises a drive, preferably a belt drive, which is coupled with the drive of the outer kneading drum (2).

6. Device (100) according to any one of the preceding claims, **characterised in that** the inner kneading drum (1) is connected with the drive of the outer kneading drum (2), in particular the gearbox (18) of the kneading drive, such that the inner kneading drum (1) co-rotates with the outer kneading drum (2).

7. Device according to any one of the preceding claims, **characterised in that** the inner kneading drum (1) and the outer kneading drum (2) are releasably and replaceably arranged on the device (100), such that kneading drums of various dimensions can be secured to the device.

8. Device for operating and kneading dough, comprising a device (100) according to any one of claims 1 to 7, wherein the outer kneading drum (2) is surrounded at least partly by a belt on its periphery, and wherein dough from a dough drum can be introduced into the kneading chambers (31) of the device (100).

## Revendications

1. Dispositif (100) servant à pétrir de la pâte, en particulier tambour de pétrissage, comprenant un tambour de pétrissage interne (1) entraîné en rotation et un tambour de pétrissage externe (2) entraîné en rotation, dans lequel le tambour de pétrissage interne (1) est disposé à l'intérieur du tambour de pétrissage externe (2) de forme creuse, en particulier de manière concentrique,
- dans lequel le dispositif (100) comprend un entraînement de pétrissage (10) à l'aide duquel le tambour de pétrissage interne (1) peut être entraîné ou peut être déplacé, suivant une amplitude définie, de manière oscillante dans la direction de son axe par rapport au tambour de pétrissage externe (2), en particulier en outre suivant un angle autour de son axe, par rapport au tambour de pétrissage externe (2),
- dans lequel le tambour de pétrissage externe (2) comprend un certain nombre d'évidements de pétrissage (30) qui sont répartis en particulier uniformément sur la périphérie et/ou le long de la direction longitudinale du tambour de pétrissage externe (2), dans lequel les évidements de pétrissage (30) sont formés de telle sorte qu'un nombre de chambres de pétrissage (31) correspondant au nombre d'évidements de pétrissage (30) soit formé entre le tambour de pétrissage externe (2) et le tambour de pétrissage interne (1), chambres de pétrissage dans lesquelles une portion de pâte peut respectivement être introduite, laquelle peut être pétrie grâce au déplacement relatif oscillant du tambour de pétrissage interne (1) par rapport au tambour de pétrissage externe (2),
- dans lequel l'entraînement de pétrissage (10) comprend un levier de pétrissage (11) qui est relié, en particulier de manière rigide, au tambour de pétrissage interne (1) à une extrémité et est, à l'autre extrémité, articulé sur un prolongement (13) d'une manivelle excentrique (12), de préférence par le biais d'une articulation à rotule (15),
- dans lequel l'entraînement de pétrissage comprend un entraînement excentrique (23) auquel est relié un arbre d'entraînement excentrique (14) de manière à pouvoir être entraîné, dans lequel l'amplitude de l'entraînement de pétrissage (10) est réglable,
- dans lequel la manivelle excentrique (12) est montée de manière à pouvoir tourner excentriquement dans un arbre de réglage (16), et dans lequel l'arbre de réglage (16) est monté de manière à pouvoir tourner dans l'arbre d'entraînement excentrique (14) de la manivelle excentrique (12) de telle sorte que, lors d'une rotation relative de l'arbre de réglage (16) par rapport à l'arbre d'entraînement excentrique (14), la position du prolongement de manivelle (13) par rapport à l'axe de rotation de l'arbre d'entraînement excentrique (14) de la manivelle excentrique (12) soit réglée et afin que l'amplitude du tambour de pétrissage interne (1) par rapport au tambour de pétrissage externe (2) soit modifiée,
dans lequel l'arbre d'entraînement excentrique (14) de la manivelle excentrique (12) est relié de manière rotative à l'entraînement excentrique (23) par l'intermédiaire d'une grande paire de roues coniques (21) et d'un grand arbre d'entraînement (22), et
dans lequel l'arbre de réglage (16) est relié de manière rotative à l'entraînement excentrique (23) par l'intermédiaire d'une petite paire de roues coniques (24), dans lequel un petit arbre d'entraînement (25) de la petite paire de roues coniques (24) est disposé et monté dans le grand arbre d'entraînement (22) de la grande paire de roues coniques (21) réalisé comme un arbre creux, et
dans lequel le petit arbre d'entraînement (25) peut être relié à l'entraînement excentrique (23) par l'intermédiaire d'un accouplement (17), en particulier un accouplement multipoint, de manière à pouvoir transmettre le couple.

2. Dispositif (100) selon la revendication 1, **caractérisé en ce que** l'accouplement (17) est formé comme un accouplement magnétique à ressort, dans lequel la liaison de l'entraînement excentrique (23) avec le petit arbre d'entraînement (25) est réalisée de telle sorte que, lors de l'actionnement de l'aimant de l'accouplement magnétique, la liaison de l'entraînement excentrique (23) avec le petit arbre d'entraînement (25) soit rompue.

3. Dispositif (100) selon l'une quelconque des revendications précédentes, **caractérisé en ce que** la manivelle excentrique (12) est reliée à l'arbre d'entraînement excentrique (14) par l'intermédiaire d'un accouplement à coulisse croisée (19) pour l'équilibrage du centre.

4. Dispositif (100) selon l'une quelconque des revendications précédentes, **caractérisé en ce que** l'entraînement de pétrissage (10) est monté et soutenu dans un bloc d'engrenages (18), dans lequel le bloc d'engrenages (18) est relié à l'entraînement du tambour de pétrissage externe (2), de sorte que le bloc d'engrenages (18) tourne avec le tambour de pétrissage externe (2) lors de l'entraînement du tambour de pétrissage externe (2).

5. Dispositif (100) selon l'une quelconque des revendications précédentes, **caractérisé en ce que** l'entraînement de pétrissage (10), en particulier l'entraînement excentrique (23), comprend un entraînement, de préférence un entraînement à courroie, qui est couplé à l'entraînement du tambour de pétrissage externe (2).

6. Dispositif (100) selon l'une quelconque des revendications précédentes, **caractérisé en ce que** le tambour de pétrissage interne (1) est relié à l'entraînement du tambour de pétrissage externe (2), en particulier au bloc d'engrenages (18) de l'entraînement de pétrissage, de sorte que le tambour de pétrissage interne (1) tourne avec le tambour de pétrissage externe (2).

7. Dispositif selon l'une quelconque des revendications précédentes, **caractérisé en ce que** le tambour de pétrissage interne (1) et le tambour de pétrissage externe (2) sont disposés de manière amovible et changeable au niveau du dispositif (100), de sorte que des tambours de pétrissage de différentes dimensions puissent être fixés sur le dispositif.

8. Dispositif servant à travailler et pétrir de la pâte, comprenant un dispositif (100) selon l'une quelconque des revendications 1 à 7, dans lequel le tambour de pétrissage externe (2) est au moins partiellement entouré d'une bande sur sa périphérie, et dans lequel de la pâte provenant d'un tambour de pâte peut être introduite dans les chambres de pétrissage (31) du dispositif (100).
